# EUROPÄISCHE PATENTSCHRIFT

(11) **EP 3 706 950 B1**
(45) Veröffentlichungstag und Bekanntmachung des Hinweises auf die Patenterteilung: **15.02.2023**
(21) Anmeldenummer: 18793577.0
(22) Anmeldetag: 10.10.2018
(51) Int. Cl.: B23K 20/10

(54) **ULTRASCHALL-SCHWEISSEINRICHTUNG**
ULTRASONIC WELDING DEVICE
DISPOSITIF DE SOUDAGE PAR ULTRASONS

(30) Priorität: 10.11.2017 DE 102017220079
(43) Veröffentlichungstag der Anmeldung: 16.09.2020
(73) Patentinhaber: Schunk Sonosystems GmbH, 35435 Wettenberg (DE)
(72) Erfinder: MUELLER, Stefan, 35580 Wetzlar (DE); WAGENBACH, Rainer, 35799 Merenberg (DE)
(74) Vertreter: advotec.
(86) Internationale Anmeldenummer: PCT/EP2018/077621
(87) Internationale Veröffentlichungsnummer: WO 2019/091687

(56) Entgegenhaltungen:
- WO-A1-2005/051589
- WO-A1-2017/145989
- DE-B3-102015 206 866
- DE-C1- 3 710 603

## Beschreibung

Die vorliegende Erfindung betrifft eine Ultraschall-Schweißeinrichtung mit einer in Richtung einer Sonotrodenlängsachse Längsschwingungen ausführenden Sonotrode mit einer an einem Sonotrodenkopf ausgebildeten Arbeitsfläche und einem Amboss, wobei zwischen der Arbeitsfläche der Sonotrode und einer der Arbeitsfläche gegenüberliegend angeordneten Gegenfläche des Amboss eine Schweißgutaufnahme zur Aufnahme von Schweißgut gebildet ist, und mit einer Anschlageinrichtung zur Definition der Schweißposition P des Schweißguts in Richtung der Sonotrodenlängsachse.

Ultraschall-Schweißeinrichtungen der eingangs genannten Art werden insbesondere bei Ultraschall-Schweißzangen zur Durchführung von Endverschweißungen an metallischen Rohrleitungen verwendet, wie sie beispielsweise als Fluidleitung an Kühlaggregaten, also insbesondere an Klimageräten oder Kühlschränken, durchgeführt werden. Derartige Endverschweißungen werden nach Befüllen eines die Fluidleitung umfassenden Kühlkreislaufes mit einem Kältemittel durchgeführt, derart, dass eine an einem freien Ende der Rohrleitung angeordnete Befüllarmatur gleichzeitig mit Durchtrennung der Endverschweißung vom Rohrleitungsende abgetrennt wird.

Um eine exakte Positionierung des in dem vorstehend erläuterten Anwendungsfall als Rohrleitung ausgebildeten Schweißguts zwischen der Arbeitsfläche der Sonotrode und der Gegenfläche des Amboss zu ermöglichen, ist an einem Gehäuse der Ultraschall-Schweißeinrichtung eine Anschlageinrichtung vorgesehen, gegen die die Rohrleitung in der Schweißposition anliegt, so dass die axiale Position der Rohrleitung in Richtung der Sonotrodenlängsachse definiert ist.

In der Praxis ist zu beobachten, dass trotz der Anordnung der Anschlageinrichtung während der Schwingungsbeaufschlagung des Schweißguts nicht sichergestellt werden kann, dass dieses gegen die Anschlageinrichtung anliegt, wenn der Bediener der Ultraschall-Schweißeinrichtung nicht gleichzeitig mit der Schwingungsbeaufschlagung des Schweißguts eine Kraft auf das Schweißgut ausübt, sodass das Schweißgut gegen die Anschlageinrichtung angedrückt wird. Aufgrund dieser manuell erzeugten Anpresskraft ist nicht in jedem Fall sichergestellt, dass die Schwei-βungen tatsächlich reproduzierbar durchführbar sind.

Aus der DE 10 2015 206866 B3 (Basis für den Oberbegriff des Anspruchs 1) ist eine Ultraschall-Schweißeinrichtung bekannt, die eine in Richtung einer Sonotrodenlängsachse Längsschwingungen ausführende Sonotrode mit einer an einem Sonotrodenkopf ausgebildeten Arbeitsfläche und einen Amboss aufweist. Zwischen der Arbeitsfläche der Sonotrode und einer der Arbeitsfläche gegenüberliegend angeordneten Gegenfläche des Amboss ist eine Schweißgutaufnahme zur Aufnahme von Schweißgut ausgebildet. Zur Definition der Schweißposition des Schweißguts in Richtung der Sonotrodenlängsachse weist die Ultraschall-Schweißeinrichtung eine Anschlageinrichtung auf. Aus der WO 2017/145989 A1 ist ein Ultraschall-Schweißgerät für Drahtlitzen bekannt, das eine geneigte Arbeitsflächen-/Gegenflächen-Anordnung aufweist.

Der vorliegenden Erfindung liegt die Aufgabe zugrunde, eine Ultraschall-Schweißeinrichtung vorzuschlagen, die eine verbesserte Reproduzierbarkeit der Ausführung von Schweißungen ermöglicht.

Zur Lösung dieser Aufgabe weist die Erfindung die Merkmale des Anspruchs 1 auf.

Erfindungsgemäß ist die Gegenfläche unter einem Neigungswinkel zur Sonotrodenlängsachse angeordnet ist, derart, dass bei einer zu einem der Arbeitsfläche benachbarten Schwingungsknoten der Sonotrode hin abfallenden Anordnung der Gegenfläche sich der Abstand zwischen der Arbeitsfläche und der Gegenfläche zum Schwingungsknoten SK hin kontinuierlich vergrößert, oder bei einer zu einem der Arbeitsfläche benachbarten Schwingungsknoten SK hin ansteigenden Anordnung der Gegenfläche der Abstand zwischen der Arbeitsfläche und der Gegenfläche im Wesentlichen konstant ist.

Der Erfindung liegt die Erkenntnis zugrunde, dass die Längsschwingungen einer Sonotrode einen an der Sonotrode haftenden Körper zu einer Translationsbewegung anregen. Die erfindungsgemäßen alternativen Ausgestaltungen der Ultraschall-Schweißeinrichtung bewirken darüber hinaus, dass ein zwischen der Arbeitsfläche und der Gegenfläche in der Schweißgutaufnahme aufgenommenes Schweißgut, also insbesondere das als Röhrchen ausgebildete Schweißgut, eine Translationsbewegung in Richtung auf die Anschlageinrichtung ausführt, sodass also selbst dann, wenn von einem Bediener keine in Richtung auf die Anschlageinrichtung hin ausgerichtete Anpresskraft auf das Schweißgut ausgeübt wird, in jedem Fall sichergestellt ist, dass das Schweißgut während des gesamten Schweißvorgangs in seiner Position konstant gegen die Anschlageinrichtung anliegt, sodass zumindest bezüglich der Schweißposition des Schweißguts reproduzierbare Schweißvorgänge sichergestellt sind.

Die erfindungsgemäße Lösung definiert alternative Erfindungsgegenstände in Abhängigkeit davon, ob eine zu einem der Arbeitsfläche benachbarten Schwingungsknoten der Sonotrode hin abfallende Anordnung der Gegenfläche gegeben ist, so dass sich in diesem Fall erfindungsgemäß der Abstand zwischen der Arbeitsfläche und der Gegenfläche zum Schwingungsknoten SK hin kontinuierlich vergrößert, oder eine zu einem der Arbeitsfläche benachbarten Schwingungsknoten SK hin ansteigende Anordnung der Gegenfläche gegeben ist, so dass in diesem Fall erfindungsgemäß der Abstand zwischen der Arbeitsfläche und der Gegenfläche im Wesentlichen konstant ist.

Im Wesentlichen konstant im Sinne der erfindungsgemäßen Lösung bedeutet, dass geringe Abweichungen zulässig sind, soweit sie den erfindungsgemäßen Vorteil, also eine auf die Anschlageinrichtung hin ausgebildete Translationsbewegung nicht gefährden.

Bei einer ersten Ausführungsform der Ultraschall-Schweißeinrichtung ist bei der zu einem der Arbeitsfläche benachbarten Schwingungsknoten der Sonotrode hin abfallenden Anordnung der Gegenfläche die Arbeitsfläche im Wesentlichen parallel zur Sonotrodenlängsachse angeordnet.

Im Wesentlichen parallel im Sinne der vorstehenden Ausführungsform bedeutet, dass geringe Abweichungen zulässig sind, soweit sie den erfindungsgemäßen Vorteil, also eine auf die Anschlageinrichtung hin ausgebildete Translationsbewegung nicht gefährden.

Bei einer weiteren vorteilhaften Ausführungsform der Ultraschall-Schweißeinrichtung ist bei der zu einem der Arbeitsfläche benachbarten Schwingungsknoten der Sonotrode hin ansteigenden Anordnung der Gegenfläche die Arbeitsfläche parallel zur Gegenfläche angeordnet.

Vorzugsweise weist bei der vorstehenden Ausführungsform der Sonotrodenkopf zur Erzielung der parallelen Anordnung der Arbeitsfläche eine zum freien Sonotrodenende hin zunehmende Querschnittshöhe auf.

Vorzugsweise ist der Neigungswinkel der Gegenfläche gegenüber der Sonotrodenlängsachse kleiner als 1°.

Besonders vorzugsweise ist der Neigungswinkel der Gegenfläche gegenüber der Sonotrodenlängsachse kleiner als 0,5°, wobei weiter bevorzugt ist, dass der Neigungswinkel größer als 0,1° und kleiner als 0,3° ist.

Nachfolgend wird anhand der Zeichnung eine Ausführungsform der Erfindung näher erläutert.

Es zeigen:
- **Fig. 1**: eine isometrische Darstellung einer mit einer UltraschallSchweißeinrichtung versehenen Schweißzange mit einer an einer zwischen einer Arbeitsfläche einer Sonotrode und einer Gegenfläche eines Amboss ausgebildeten Schweißgutaufnahme angeordneten Anschlageinrichtung;
- **Fig. 2**: die in **Fig. 1** dargestellte Schweißgutaufnahme in vergrößerter Seitenansicht;
- **Fig. 3**: eine Sonotrode in isometrischer Darstellung;
- **Fig. 4**: eine dem Stand der Technik entsprechende Anordnung einer Sonotrode, die längs ihrer Längsachse mit Schwingungen beaufschlagt wird und eine parallel zur Längsachse angeordnete Arbeitsfläche aufweist;
- **Fig. 5**: eine Sonotrodenanordnung gemäß einer ersten Ausführungsform der erfindungsgemäßen Ultraschall-Schweißeinrichtung;
- **Fig. 6**: eine Sonotrodenanordnung gemäß einer zweiten Ausführungsform der erfindungsgemäßen Ultraschall-Schweißeinrichtung.

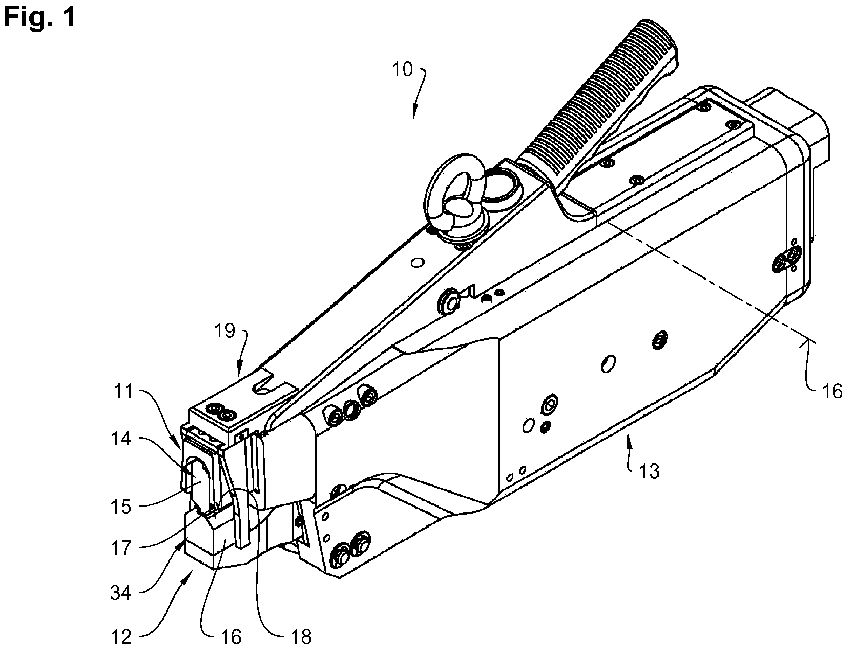

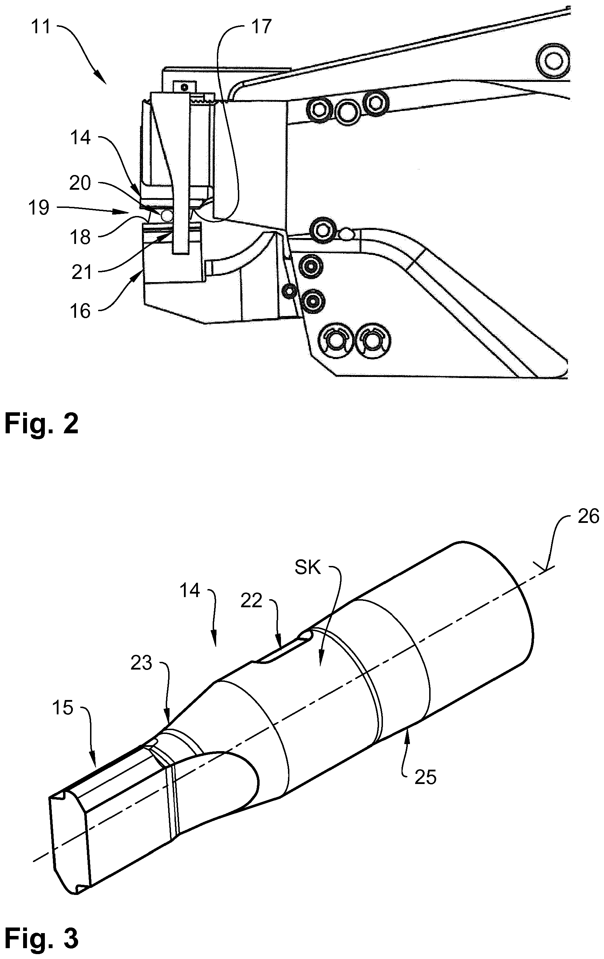

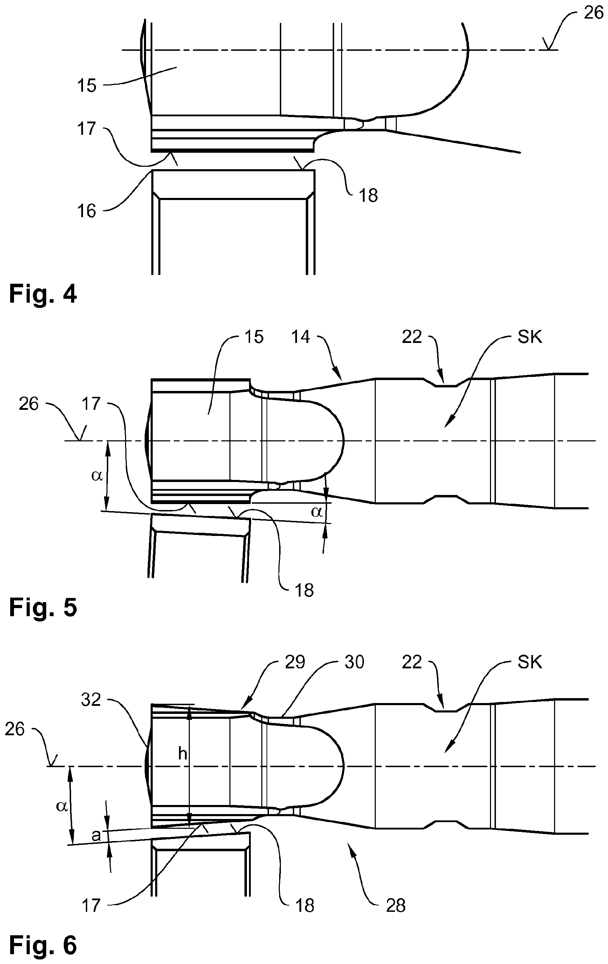

**Fig. 1** zeigt in isometrischer Darstellung eine als Ultraschall-Schweißzange ausgebildete Ultraschall-Schweißeinrichtung 10, die einen oberen Zangenteil 11 und einem unteren Zangenteil 12 aufweist, die in einem gemeinsamen Zangengehäuse 13 angeordnet sind. Das obere Zangenteil 11 weist eine insbesondere in **Fig. 4** ohne das Zangengehäuse 13 dargestellte Sonotrode 14 der Ultraschall-Schweißeinrichtung 34 auf, die mit einem Sonotrodenkopf 15 gegenüberliegend einem am unteren Zangenteil 12 ausgebildeten Amboss 16 der Ultraschall-Schweißeinrich-tung 34 angeordnet ist, derart, dass zwischen einer Arbeitsfläche 17 der Sonotrode 14 und einer Gegenfläche 18 des Amboss 16 eine insbesondere in Fig. 2 dargestellte Schweißgutaufnahme 19 gebildet ist.

Im Fall des dargestellten Ausführungsbeispiels ist der Amboss 16 mittels einer nicht näher dargestellten Betätigungseinrichtung um eine im hinteren Teil des Zangengehäuses 13 ausgebildete Schwenkachse 16 gegen den Sonotrodenkopf 15 der Sonotrode 14 verschwenkbar, derart, dass die auf dem Amboss 16 ausgebildete Gegenfläche 18 gegen die Arbeitsfläche 17 der Längsschwingungen ausführenden Sonotrode 14 bewegt werden kann.

Wie in **Fig. 2** dargestellt, dient die zwischen der Arbeitsfläche 17 der Sonotrode 14 und der Gegenfläche 18 des Amboss 16 ausgebildete Schweißgutaufnahme 19 zur Aufnahme eines im vorliegenden Fall als Metallröhrchen ausgeführten Schweißguts 20. Wie aus **Fig. 2** weiter ersichtlich, ist das obere Zangenteil 11 mit einer Anschlageinrichtung 21 versehen, die in ihrer Relativposition in Richtung der Sonotrodenlängsachse 26 veränderbar ist.

**Fig. 3** zeigt eine konventionell ausgebildete Sonotrode 14, die einen Sonotrodenkopf 15 aufweist, welcher über einen Sonotrodenhals 23 mit einem Sonotrodenkörper 25 verbunden ist. Der Sonotrodenkopf 15 weist einen konstanten Querschnitt auf mit parallel zueinander angeordneten Arbeitsflächen 17, die zweifach ausgebildet sind, sodass in bekannter Weise nach einer Abnutzung einer ersten Arbeitsfläche 17 die Sonotrode 14 um 180° um die Sonotrodenlängsachse 26 gewendet werden kann, um anschließend die zweite Arbeitsfläche 17 gegenüberliegend der Gegenfläche 18 des Amboss 16 (s. **Fig. 2****)** anzuordnen.

Die Sonotrode 14 weist benachbart dem Sonotrodenkopf 15 einen Schwingungsknoten SK mit einer gegen Null gehenden Amplitude der Längsschwingungen auf, der bei der dargestellten Ausführungsform in einem Halteabschnitt 22 der Sonotrode 14 ausgebildet ist, der zur Abstützung der Sonotrode an einem hier nicht näher dargestellten Lager dient.

In **Fig. 4** ist eine konventionelle Sonotrodenanordnung in einer Ultraschall-Schweißeinrichtung dargestellt, bei der sowohl die Arbeitsfläche 17 der Sonotrode 14 als auch die der Arbeitsfläche 17 gegenüberliegend angeordnete Gegenfläche 18 des Amboss 16 parallel zur Sonotrodenlängsachse 26 angeordnet sind.

**Fig. 5** zeigt in einer ersten Ausführungsform der Erfindung eine Sonotrodenanordnung einer Ultraschall-Schweißeinrichtung 10, bei der die Gegenfläche 18 unter einem Neigungswinkel α zur Sonotrodenlängsachse 26 angeordnet ist, derart, dass die Gegenfläche 18 zu dem der Arbeitsfläche 17 benachbarten Schwingungsknoten SK hin abfallend angeordnet ist und sich der Abstand a zwischen der Arbeitsfläche 17 und der Gegenfläche 18 zum Schwingungsknoten SK hin kontinuierlich vergrößert.

Bei der in **Fig. 6** dargestellten Sonotrodenanordnung einer weiteren Ausführungsform der Erfindung ist eine Sonotrode 28 vorgesehen, die im Unterschied zu der in den **Fig. 3** bis **5** dargestellten Sonotrode 14 einen Sonotrodenkopf 29 aufweist, der über einen Sonotrodenhals 30 mit einem Sonotrodenkörper 31 verbunden ist und keinen konstanten Querschnitt aufweist, sondern eine vom Sonotrodenhals 30 zu einem freien Sonotrodenende 32 hin zunehmend ausgebildete Querschnittshöhe h aufweist.

Bei der Sonotrode 28 ist die Gegenfläche 18 unter einem Neigungswinkel α zur Sonotrodenlängsachse 26 angeordnet, derart, dass die Gegenfläche 18 zu dem der Arbeitsfläche 17 benachbarten Schwingungsknoten SK hin ansteigend angeordnet ist und der Abstand a zwischen der Arbeitsfläche 17 und der Gegenfläche 18 im Wesentlichen konstant ist. Insbesondere ergibt sich im Fall des dargestellten Ausführungsbeispiels eine zur Arbeitsfläche 17 parallele Anordnung der Gegenfläche 18.

## Patentansprüche

1. Ultraschall-Schweißeinrichtung (10) mit einer in Richtung einer Sonotrodenlängsachse (26) Längsschwingungen ausführenden Sonotrode (14, 28) mit einer an einem Sonotrodenkopf (15, 29) ausgebildeten Arbeitsfläche (17) und einem Amboss (16), wobei zwischen der Arbeitsfläche (17) und einer der Arbeitsfläche (17) gegenüberliegend angeordneten Gegenfläche (18) des Amboss (16) eine Schweißgutaufnahme (19) zur Aufnahme von Schweißgut (20) gebildet ist, und mit einer Anschlageinrichtung (21) zur Definition der Schweißposition P des Schweißguts (20) gegenüber der Arbeitsfläche (17) in Richtung (22) der Sonotrodenlängsachse (26),
**dadurch gekennzeichnet,**
**dass** die Gegenfläche (18) unter einem Neigungswinkel α zur Sonotrodenlängsachse (26) angeordnet ist, derart, dass bei einer zu einem der Arbeitsfläche (17) benachbarten Schwingungsknoten der Sonotrode (14, 28) hin abfallenden Anordnung der Gegenfläche (18) sich der Abstand a zwischen der Arbeitsfläche (17) und der Gegenfläche (18) zum Schwingungsknoten SK hin kontinuierlich vergrößert, oder bei einer zu einem der Arbeitsfläche (17) benachbarten Schwingungsknoten SK hin ansteigenden Anordnung der Gegenfläche (18) der Abstand a zwischen der Arbeitsfläche (17) und der Gegenfläche (18) im Wesentlichen konstant ist.

2. Ultraschall-Schweißeinrichtung nach Anspruch 1,
**dadurch gekennzeichnet,**
**dass** bei der zu einem der Arbeitsfläche (17) benachbarten Schwingungsknoten SK der Sonotrode (14, 28) hin abfallenden Anordnung der Gegenfläche (18) die Arbeitsfläche (17) im Wesentlichen parallel zur Sonotrodenlängsachse (26) angeordnet ist.

3. Ultraschall-Schweißeinrichtung nach Anspruch 1,
**dadurch gekennzeichnet,**
**dass** bei der zu einem der Arbeitsfläche (17) benachbarten Schwingungsknoten SK der Sonotrode (14, 28) hin ansteigenden Anordnung der Gegenfläche (18) die Arbeitsfläche (17) parallel zur Gegenfläche (18) angeordnet ist.

4. Ultraschall-Schweißeinrichtung nach Anspruch 3,
**dadurch gekennzeichnet,**
**dass** zur Erzielung der parallelen Anordnung der Arbeitsfläche (17) der Sonotrodenkopf (29) eine zu einem freien Sonotrodenende (32) hin zunehmende Querschnittshöhe h aufweist.

5. Ultraschall-Schweißeinrichtung nach einem der vorangehenden Ansprüche,
**dadurch gekennzeichnet,**
**dass** der Neigungswinkel α der Gegenfläche (18) gegenüber der Sonotrodenlängsachse (26) kleiner als 1° ist.

6. Ultraschall-Schweißeinrichtung nach Anspruch 5,
**dadurch gekennzeichnet,**
**dass** der Neigungswinkel α der Gegenfläche (18) gegenüber der Sonotrodenlängsachse (26) kleiner als 0,5° ist.

7. Ultraschall-Schweißeinrichtung nach Anspruch 6,
**dadurch gekennzeichnet,**
**dass** der Neigungswinkel α größer 0,1° und kleiner als 0,3° ist.

## Claims

1. An ultrasonic welding device (10) comprising a sonotrode (14, 28) emitting longitudinal vibrations in the direction of a longitudinal sonotrode axis (26) and comprising a work surface (17) realized on a sonotrode head (15, 29) and comprising an anvil (16), a weldment accommodation (19) for housing a weld deposit (20) being realized between the work surface (17) and a counterface (18) of the anvil (16) which is disposed opposite the work surface (17), and comprising a stop device (21) for defining the welding position P of the weld deposit (20) with respect to the work surface (17) in the direction (22) of the longitudinal sonotrode axis (26),
**characterized in that**
the counterface (18) is disposed at an inclination α towards the longitudinal sonotrode axis (26) in such a manner that, when the counterface (18) is inclined downward towards a vibration node of the sonotrode (14, 28) adjacent to the work surface (17), distance a between the work surface (17) and the counterface (18) continuously increases towards the vibration node SK, or, when the counterface (18) is inclined upward towards a vibration node SK adjacent to the work surface (17), distance a between the work surface (17) and the counterface (18) is essentially constant.

2. The ultrasonic welding device according to claim 1,
**characterized in that**
when the counterface (18) is inclined downward towards a vibration node SK of the sonotrode (14, 28) adjacent to the work surface (17), the work surface (17) is disposed essentially parallel to the longitudinal sonotrode axis (26).

3. The ultrasonic welding device according to claim 1,
**characterized in that**
when the counterface (18) is inclined upward towards a vibration node SK of the sonotrode (14, 28) adjacent to the work surface (17), the work surface (17) is disposed parallel to the counterface (18).

4. The ultrasonic welding device according to claim 3,
**characterized in that**
the sonotrode head (29) has a cross-sectional height h, which increases towards a free sonotrode end (32), for achieving the parallel arrangement of the work surface (17).

5. The ultrasonic welding device according to any one of the preceding claims,
**characterized in that**
inclination α of the counterface (18) is less than 1° with respect to the longitudinal sonotrode axis (26).

6. The ultrasonic welding device according to claim 5,
**characterized in that**
inclination α of the counterface (18) is less than 0.5° with respect to the longitudinal sonotrode axis (26).

7. The ultrasonic welding device according to claim 6,
**characterized in that**
inclination α is greater than 0.1° and less than 0.3°.

## Revendications

1. Moyen de soudage (10) par ultrasons comprenant une sonotrode (14, 28) effectuant des vibrations longitudinales dans la direction d'un axe longitudinal (26) de la sonotrode et comprenant une surface de travail (17) réalisée sur une tête de sonotrode (15, 29) et comprenant une enclume (16), une réception (19) du matériau à souder pour recevoir du matériau à souder (20) étant réalisée entre la surface de travail (17) et une contre-surface (18) de l'enclume (16) qui est disposée de manière opposée à la surface de travail (17), et comprenant un moyen d'arrêt (21) pour définir la position de soudage P du matériau à souder (20) par rapport à la surface de travail (17) dans la direction (22) de l'axe longitudinal (20) de la sonotrode,
**caractérisé en ce que**
la contre-surface (18) est disposée sous un angle d'inclination α par rapport à l'axe longitudinal (20) de la sonotrode de manière que, lorsque la contre-surface (18) descend vers un noeud de vibration de la sonotrode (14, 28) qui est adjacent à la surface de travail (17), la distance a entre la surface de travail (17) et la contre-surface (18) augmente continuellement vers le noeud de vibration SK, ou, lorsque la contre-surface (18) monte vers un noeud de vibration SK qui est adjacent à la surface de travail (17), la distance a entre la surface de travail (17) et la contre-surface (18) est essentiellement constante.

2. Moyen de soudage par ultrasons selon la revendication 1,
**caractérisé en ce que**
lorsque la contre-surface (18) descend vers un noeud de vibration SK de la sonotrode (14, 28) qui est adjacent à la surface de travail (17), la surface de travail (17) est disposée essentiellement parallèlement par rapport à l'axe longitudinale (26) de la sonotrode.

3. Moyen de soudage par ultrasons selon la revendication 1,
**caractérisé en ce que**
lorsque la contre-surface (18) monte vers un noeud de vibration SK de la sonotrode (14, 28) qui est adjacent à la surface de travail (17), la surface de travail (17) est disposée parallèlement par rapport à la contre-surface (18).

4. Moyen de soudage par ultrasons selon la revendication 3,
**caractérisé en ce que**
pour obtenir la disposition parallèle de la surface de travail (17), la tête de sonotrode (29) a une hauteur h de section transversale qui augmente vers une extrémité de sonotrode (32) libre.

5. Moyen de soudage par ultrasons selon l'une quelconque des revendications précédentes,
**caractérisé en ce que**
l'angle d'inclinaison α de la contre-surface (18) est inférieur à 1° par rapport à l'axe longitudinal (26) de la sonotrode.

6. Moyen de soudage par ultrasons selon la revendication 5,
**caractérisé en ce que**
l'angle d'inclinaison α de la contre-surface (18) est inférieur à 0,5° par rapport à l'axe longitudinal (26) de la sonotrode

7. Moyen de soudage par ultrasons selon la revendication 6,
**caractérisé en ce que**
l'angle d'inclinaison α es supérieur à 0,1° et inférieur à 0,3°.
